# EUROPEAN PATENT APPLICATION

(11) **EP 1 710 660 A2**
(43) Date of publication of application: **11.10.2006**
(21) Application number: 06006968.9
(22) Date of filing: 31.03.2006
(51) Int. Cl.: G06F 1/20

(54) **Cooling system for an electronic system**

(30) Priority: 31.03.2005 JP 2005102328
(71) Applicant: HITACHI, LTD., Chiyoda-ku Tokyo 100-8280 (JP)
(72) Inventor: Terakado, Shuichi Hitachi, Ltd IPG 12th Floor, Tokyo 100-8220 (JP); Nishihara, Atsuo Hitachi, Ltd IPG 12th Floor, Tokyo 100-8220 (JP); Ohashi, Shigeo Hitachi, Ltd IPG 12th Floor, Tokyo 100-8220 (JP); Minamitani, Rintaro Hitachi, Ltd IPG 12th Floor, Tokyo 100-8220 (JP); Naganawa, Takashi Hitachi, Ltd IPG 12th Floor, Tokyo 100-8220 (JP)
(74) Representative: Beetz & Partner

(57) **Abstract**

The invention relates to a cooling jacket (100) for use in electronic apparatus having a heat-generating element (200) therein, for transmitting heat generated from the heat-generating element (200) into a liquid coolant flowing therein. The cooling jacket (100) comprises a cover (130) building up a heat transfer surface to be in contact with a surface of the heat-generating element (200), a passage (110) for the liquid coolant, which is formed neighboring the heat transfer surface and wound round in an "S"-like manner inside the main body (120) of the cooling jacket (100), and an inlet (111) and an outlet (112) attached at both ends of the flow passage for the liquid coolant, and further a dispersion member (150) is disposed in the flow passage, being built up by gathering a plural number of members (150), each of which has a "U"-like cross-section and an aspect ratio of 10 to 20, thereby diffusing the liquid coolant therein, so as to transfer the heat from the heat-generating element (200) thereto with high efficiency, and thereby enabling to cool down the heat-generating element (200), fully, even with a relatively small amount or volume of the liquid coolant.

## Description

### BACKGROUND OF THE INVENTION

The present invention relates to a cooling jacket for transmitting heat generated in an apparatus into a liquid refrigerant or coolant flowing inside thereof, and in particular, it relates to a cooling jacket to be used within a liquid cooling system, for enabling an effective cooling of a heat-generating element, within various kinds of electronic apparatuses wherein the heat-generating element is mounted, i.e., a semiconductor integrated circuitelement, such as, personal computers and servers, and further notebook-type personal computers, etc.

Conventionally, electronic apparatuses such as personal computers and servers, and notebook-type personal computers comprise semiconductor elements being a heat-generating element, i.e., a CPU (Central Processing Unit), representatively, and for this reasen, in general, cooling for maintaining a normal operation of the heat-generating element is necessary. Conventionally, for achieving such a cooling, there is applied, in general, a cooling system of air-cooling type, wherein a heat-transferring member, being formed with fins in one body and called "heat sink", is attached to the heat-generating element, thermally connected therewith, while providing a fan for blowing cooling air thereon.

However, in recent years, as a consequence of the tendency of small-sizing and high-integration of semiconductor integrated circuitelements, being heat-generating elements,and further with high performances thereof, heat-generation is increased in such heat-generating elements, and at the same time localization is also generated, in particular, relating to heat-generating portions thereof. For this reason, attention is paid to liquid cooling-type cooling systems having a high cooling efficiency, which apply water as the coolant, for example, in place of conventional air-cooling type cooling systems, and they are actually adopted.

Such liquid cooling-type cooling systems having high cooling efficiency, to be applied to electronic apparatus, as mentioned above, which have already been known from the following Patent Documents, etc., comprise, in general, a member, being a so-called "heat-receiving jacket" or "cooling jacket", which is mounted directly on the surface of the CPU, being the heat-generation body, while running a liquid coolant within a flow passage formed inside the heat-receiving jacket. Thus, the heat generated by the CPU is transmitted into the coolant flowing within the above-mentioned jacket, thereby cooling the heat-generating body at high efficiency. However, in such a cooling system of liquid cooling type, normally, a heat cycle is built up using the cooling jacket mentioned above as heat-receiving portion; in more details, the system comprises a circulation pump for circulating the liquid coolant within the cycle, a radiator being a heat radiation portion for radiating heat of the liquid coolant to the outside, and further a coolant tank provided in a part of the cycle, depending on the necessity thereof, for storing the liquid coolant therein, and wherein the components are connected through metal tubes or tubes made of an elastic body, such as rubber, etc., for example.

Patent Document 1: Japanese Laid-Open Patent Application No. Hei 6-266474 (1994), and

Patent Document 2: Japanese Laid-Open Patent Application No. Hei 7-142886 (1995).

By the way, within the liquid cooling system of actively circulating the liquid coolant within the system, as was known from the prior art mentioned above, the cooling jacket for transmitting the heat from the heat-generating body into the liquid coolant, in general, has such a structure that the flow passage for the liquid coolant is formed within a housing made of a metal, such as, copper or aluminum, etc., or that a metal pipe is welded on a metal plate. However, in recent years, because of the increase of heat generation within the heat-generating element, in particular, it is strongly demanded to improve the cooling capacity thereof, and for example, an electrical fan is further attached to the radiator so as to forcedly accelerate heat radiation. However, it cannot be said that sufficient improvements have been made regarding an improvement of the cooling jacket, in particular, the heat conduction thereof.

Thus, as is apparent from the prior art mentioned above, in the cooling jacket of the conventional art, the liquid coolant cooled down in the radiator flows into the flow passage formed within the metal housing thereof; however in that instance, because the liquid coolant cannot be fully diffused within the flow passage, it is impossible to fully or sufficiently cool down the heat-generating element, such as, a CPU, which in recent years, for example, show a remarkable increase of the value of heat generation. Further, this means that it is important to transmit the heat generated from the heat-generation body into the liquid coolant with high efficiency, in particular for the liquid cooling system adopted in electronic apparatuses, such as the above-mentioned personal computers, servers, and notebook-type personal computers, etc. , because the amount or volume of the liquid coolant which is circulated within the system is very small, differing from that of the conventional liquid cooling systems adopted in large-scale computers.

### BRIEF SUMMARY OF THE INVENTION

The present invention is accomplished by taking such drawbacks into consideration; in more details, it is an object to provide a cooling jacket enabling to transmit heat generated from the heat-generating element into the liquid coolant with high efficiency, and thereby enabling to cool down the heat-generating element fully, even with a relatively small amount or volume of the liquid coolant.

The above problem is solved according to claim 1. The dependent claims relate to preferred embodiments of the invention.

For accomplishing the object mentioned above, according to the present invention, there is provided a cooling jacket for use in electronic apparatus having a heat-generating element in a housing thereof, comprising: a main body being in contact with a surface of the heat-generating element, for transmitting heat generated within the heat-generating element to a liquid coolant flowing therein, a flowpassage for the liquid coolant, being formed inside the main body of the cooling jacket, being wound round therein, and an inlet and an outlet for the liquid coolant, being attached at both ends of the flow passage for the liquid coolant, and further comprising: a dispersion member disposed in the flow passage being formed to be wound round, which is built up with a plural number of plate-like members piled up to be aligned in the same direction within the flow passage of the liquid coolant, wherein the flow passage for the liquid coolant is dispersed into a plural number of channels, and the aspect ratio of each of the channels, which are defined by the dispersion members between the dispersion members, lies in the range of 10 to 20.

Also, according to a preferred embodiment of the present invention, in the cooling jacket as described above, the dispersion member is built up by gathering a plural number of members, each having a "U"-like cross-section, or a plural number of tube-like members, each having an elliptical or ellipse-like cross-section, or a plural number of members, each having a "C"-like cross-section.

Further, according to the present invention, it is preferable that further one or more openings are provided on the surface or in the dispersion members.

### BRIEF DESCRIPTION OF THE DRAWINGS

Those and other objects, features and advantages of the present invention will become more readily apparent from the following detailed description when taken in conjunction with the accompanying drawings wherein:
Fig. 1 is an exploded perspective view for showing the entire structure of a cooling jacket according to an embodiment of the present invention;
Figs. 2 (a) to 2 (c) are partial enlarged views for explaining the detailed structure of members for building up a diffusion element in the cooling jacket mentioned above;
Fig. 3 is a partial enlarged perspective view for showing a variation of the member for building up the diffusion member mentioned above;
Fig. 4 is an enlarged perspective view for showing the structure of the diffusion member which is built up with the member shown in Fig. 3;
Figs. 5 (a) and 5 (b) are upper views for showing the structure of other examples of the diffusion member which is built up with the member shown in Fig. 3;
Figs. 6 (a) and 6(b) are views for explaining an example of a process for attaching the cover of the cooling jacket onto the upper surface of the main body to be fixed thereon liquid-tight; and
Fig. 7 is a perspective view, with an exploded portion thereof, for showing the condition of installing the cooling jacket mentioned above into a notebook-type personal computer as a liquid cooling system for an electronic apparatus.

### DETAILED DESCRIPTION OF THE INVENTION

Hereinafter, embodiments according to the present invention will be fully explained by referring to the attached drawings.

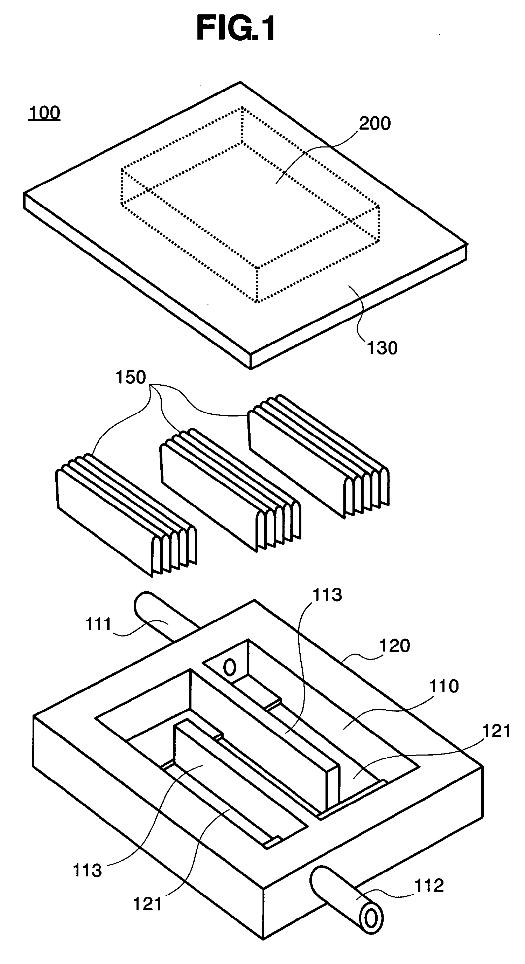

First of all, Fig. 1 shows the structure of a cooling jacket according to an embodiment of the present invention through the exploded perspective viewthereof.Also,thiscoolingjacketbuilds up a so-called liquid cooling system within an electronic apparatus including the heat-generating element (for example, a CPU, etc.) inside the housing thereof, such as, a personal computer and a server, a notebook-type personal computer, etc., for example, for cooling the heat-generating element by circulating a liquid coolant therein, with high efficiency.

The cooling jacket 100, as is apparent from the figure, has an approximately rectangular configuration, and it also comprises a main body 120 which includes a passage 110 for the liquid coolant therein, winding round in an approximately "S"-like shape, and a plate-like cover 130 to be attached to the main body 120, covering the upper surface thereof. The main body 120 is made of a metal having superior heat conductibility, such as, copper, aluminum, etc., for example. In more details, the main body 120 may preferably have a size of (vertical) 30 mm × (horizontal) 40 mm × (height) 5 mm, in the outer configuration, and the passage 110 is formed through machining or press working, winding approximately "S"-like. Further, the passage 110 in the figure comprises step-like portions 121, each of which is formed around the center of the winding passage 110, and into these portions will be inserted a diffusion (or dispersion) member 150, for diffusing the liquid coolant flowing within the passage 110, to be fixed therein, as will be explained later.

Also, at both ends of the "S"-like winding passage 110 formed within the main body 120 are inserted, for example, pipes 111 and 112 made of a metal, to be fixed therein, thereby forming an inlet and an outlet for the liquid coolant flowing through the cooling jacket. It further comprises wall-surface portions 113, each projecting within the main body 120, so as to divide the "S"-like winding passage 110 mentioned above.

On the other hand, also the cover 130 is made from a plate of a metal (for example, having a thickness of 2 mm), being superior in thermal conductivity, such as copper, aluminum, etc., similar to that of the main body 120 mentioned above, being cut out into a predetermined shape, for example, (vertical) 30 mm × (horizontal) 40 mm. Further, as is apparent from the figure, the cover 130 will be fixed on the main body 120, when the cooling jacket 100 is completed, thereby building up a heat transfer surface thereon, to be contacted on the surface of the heat-generating element 200.

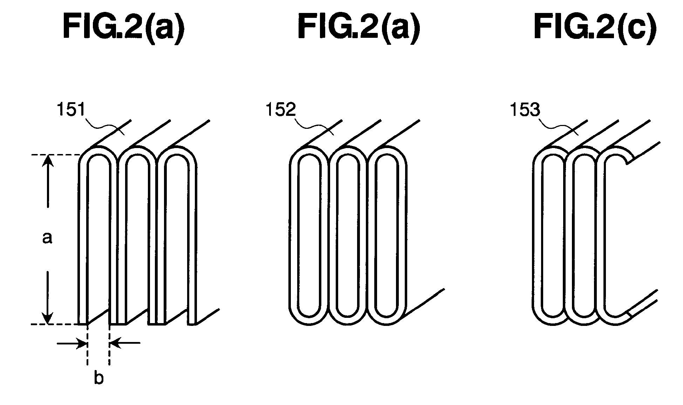

Next, into portions of the "S"-like winding passage 110 of the main body 120, i.e., around the central portions on the three (3) sections of passages making up the straight-line portions of the "S"-like winding passage 110, and in particular, that corresponding to the step-like portions 121, there will be inserted the diffusion members 150 mentioned above, to be fixed therein; more detailed structures of the diffusion member 150 are shown in Figs. 2(a) to 2(c).

First, Fig. 2(a) shows one example of piling up a plural number of members 151, each having a "U"-like cross-section, thereby making up the diffusion members 150, similar to the diffusion member 150 shown in Fig. 1. The members 151 are also made from a metal plate (for example, having a thickness of 0.3 mm) being superior in the thermal conductivity, such as copper, aluminum, etc., similar to that of the main body 120 and the cover 130 mentioned above, being bent into the "U"-like shape.

Those "U"-like members 151 are inserted into portions of the "S"-like winding passages 110, thereby to achieve the function of dispersing the liquid coolant flowing within the passage into a plural number of channels. For that purpose, as had been found from various kinds of experiments, it is preferable to determine the aspect ratio (such as, a/b) of the cross-section of the channel (i.e., the guide groove), which is made up by the member 151, to be about 10 to 20, approximately. Herein, "a" is the height of the flow passage (i.e., the guide groove) and "b" the width of the member 151, as is apparent from Figure 2(a).

Namely, with provision of the diffusion member 150 having such a structure as mentioned above, since the liquid coolant absorbing the heat from the heat-generating element 200 while flowing within the "S"-like winding passages 110 is diffused into the direction for diffusion on the way of the "S"-like winding passages 110, therefore it is possible to transfer the heat from the heat-generating element into the liquid coolant effectively, thereby enabling to cool down the heat-generating element fully, even with using a relatively small amount or volume of the liquid coolant therein.

Fig. 2 (b) shows another example of gathering and piling up a plural number of pipe-like or tube-like members 152, each having an elliptical or ellipse-like cross-section, in place of the "U"-like members 151, thereby building up a diffusion member 150. Further, Fig. 2 (c) shows another example of gathering and piling up a plural number of members 153, each having a "C"-like cross-section, thereby building up a diffusion member 150. Also within those variations, the members 152 or 153 are made from a plate of a metal (for example, having thickness of 0.3 mm), being superior in the thermal conductivity, such as, copper, aluminum, etc., similar to that of the main body 120 and the cover 130 mentioned above, being formed into the predetermined shape. As is shown in Figs. 2(a), 2(b) and 2(c), since each of the diffusion members 151, 152 and 153 has a curved portion at and end thereof, it is possible to position the width "b" of a group of channels, equally and easily, but without necessity of a special jig or member, for the positioning thereof. Also, for the purpose of increasing the heat conductivity into the liquid coolant, it is preferable to make the width of the channel as small as possible, so as to align the diffusion member 150 with increasing the number of pieces thereof as much as possible. Thus, the effect on positioning of the channel width by means of the curved portions of the diffusion member 150 comes to be effective, in particular, for increasing the performance of the cooling jacket, in which a large number of diffusion members must be aligned at a very small gap therebetween. Also, since those members 152 and 153 can diffuse the liquid coolant on its way, which flows within the "S"-like winding passages 110, into the direction of heat diffusion, in the similar manner to that of the "U"-like members 151, it is possible to transfer the heat from the heat-generating element into the liquid coolant, effectively, and therefore this enables to cool down the heat-generating element, fully, even with using the relatively small amount or volume of the liquid coolant therein.

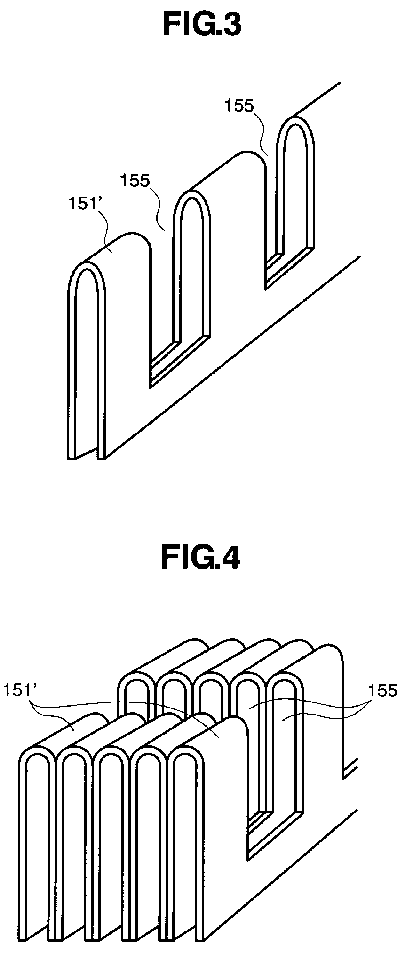

Fig. 3 shows a member 151' comprising openings 155 in the wall thereof, as a variation of the "U"-like member 151 mentioned above.

Further, Fig. 4 shows the condition of gathering and piling up a plural number of members 151', each comprising an opening 155 therein, and in this example, they are disposed so that the openings 155 of the members 151' adjacent to each other are aligned in the horizontal direction. Thus, with a diffusion member 150 obtained by gathering and piling up a plural number of members 151' of such a structure, the liquid coolant flowing therein is diffused on the way through the openings 155, and therefore, it is possible to achieve the transfer of heat from the heat-generating element to the liquid coolant with high efficiency.

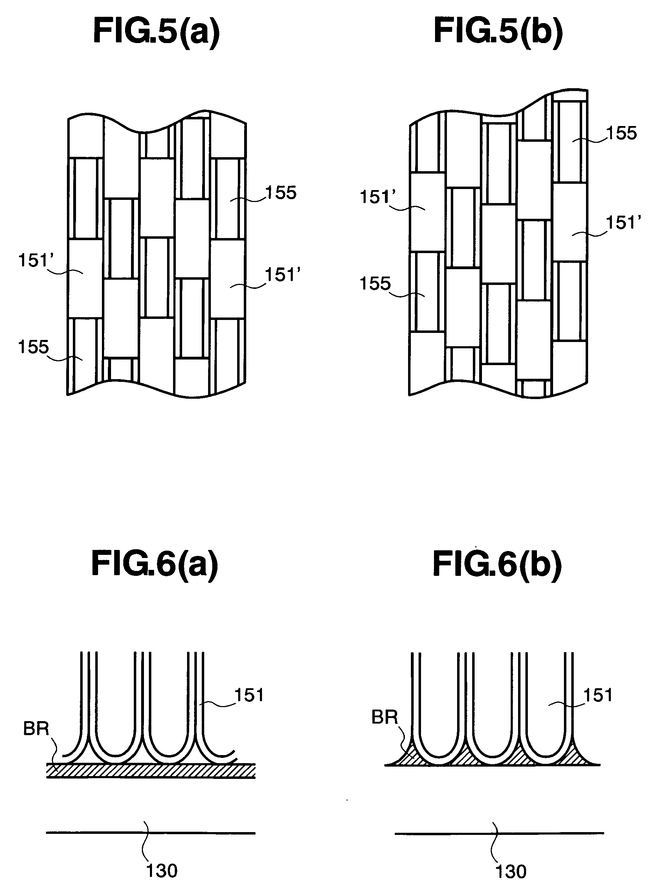

In the variations mentioned above there are shown structures composed of a plural number of members 151' for building up the diffusion member 150 such that the openings 155 thereof are aligned in the horizontal direction; however, in place thereof, they may be piled up on each other so that the openings 155 are shifted in their position by a predetermined gap to one another (i.e., staggered), as is shown in Fig. 5(a), or, as shown in Fig. 5 (b), they may be positioned at random. Also with such structures, the liquid coolant flowing within the diffusion member can be further diffused on the way through the openings 155, and therefore it is possible to achieve a heat transfer from the heat-generating element to the liquid coolant with high efficiency. Further, because of the intermittences of the channel wall by the openings 155, the boundary layers of temperature, which are generated in the liquid coolant in the vicinity of the channel wall are divided. Therefore, it is possible to obtain an improved heat transfer due to the so-called front-edge effect.

In the following, explanation will be made in brief of a manufacturing method of the cooling jacket, detailed structures and variations of which had been explained above. As was mentioned previously, into the main body 120, which is made through machining or press working of a metal, such as copper, aluminum, etc., in particular, into the step-like portions 121, which are formed in portions of the "S"-like winding passages 110, there are inserted the diffusion members 150 (in the present embodiment, the members 151), each of which is also formed by bending and cutting a metal plate, and thereafter, upon the upper surface of the main body is attached the cover 130 made of a metal, such as copper or aluminum, etc., liquid-tight, to complete the device. For instance, in particular, when attaching the cover 130 onto the upper surface of the main body 120, to be fixed hermetically, it can be easily achieved through brazing of copper or silver.

First of all, for example, a sheet-like brazing material BR on the basis of copper or silver is attached on the upper surface of the main body 120, and on it is mounted the cover 130 at a predetermined position thereon. Thereafter, as is shown in Fig. 6(a), brazing is carried out thereon, through heating in a furnace, turning them upside down. In that instance, as is shown in Fig. 6(b), the brazing material BR enters into the space between the main body 120 and the cover 130, thereby bonding them, and, as is shown by the hatching in the figure, it also enters into the gap defined between the cover 130 and the members 151 which builds up the diffusion member 150. Since the curved portion is formed at each end of the diffusion members 151 (i.e., the connecting portions between the cover 130), the brazing material inters into spaces defined at the connecting portions between the curved portions of the diffusion members adjacent to each other and the cover 130, thereby improving the adhesion therebetween (i.e., improving the heat conductivity from the cover 130 into the diffusion members 151), as well as preventing the brazing material from entering between the diffusion members defining the channels. This effect can be also obtained in similar manner for any one of the members having the "U"-like cross-section, the tube-like members having the elliptical cross-section, and the members having the "C"-like cross-section, as are shown in Figs. 2(a), 2(b) and 2(c). Thus, it is possible to obtain a liquid-tight connection between the main body 120 and the cover 130 with certainty, but without blocking or clogging the channels formed within the members.

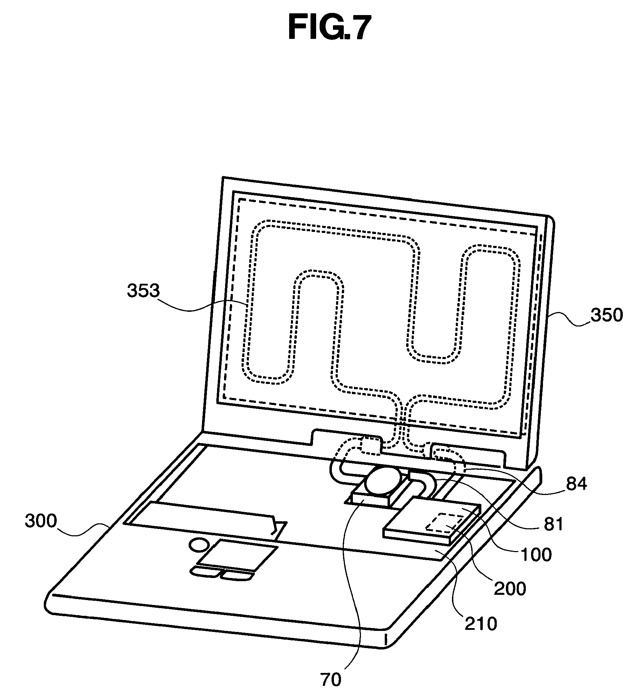

In addition, Fig. 7 shows an example, wherein the cooling jacket, the detailed structure of which has been explained above, is applied to a notebook-type personal computer, as being an electronic apparatus to be cooled with a liquid-cooling system. Thus, Fig. 7 shows the structure of a personal computer of notebook type, in general, which is constructed with a main body 300 of the personal computer and also a cover 350 attached to the main body in a freely open/closable manner through a hinge mechanism, for example.

However, in Figure 7, the main body is shown in the condition of the keyboard portion thereof being removed, which is normally attached on the surface thereof, for the purpose of showing the inside thereof. Also, in the personal computer of the notebook type demanded to be small in size as well as lightweight and portable, in contrast to the personal computers of the desktop type, in general, so-called a radiator portion is built up with a metal plate disposed on the reverse side of the liquid-crystal display, which is attached on the inner side-surface of the cover 350, and a metal conduit 353 wound round on the surface of the metal plate, thereby discharging the heat of the apparatus into the outside. Further, the cooling jacket 100 builds up the liquid cooling system, together with a circulation pump 70, including the radiator portion therein. Thus, the liquid coolant (for example, water, or a water mixed with a so-called antifreeze, such as, propylene glycol, etc., for example, at a predetermined ratio), which is driven by means of the circulation pump 70, flows through the radiator portion and also the cooling jacket 100.

On the wiring board 210, which is disposed on the bottom portion of the main body 300, is mounted the CPU 200, i.e., the heat-generating element, and on the upper surface of which is attached (for example, being fixed by means of screws, etc.) the heat-receiving jacket 100 under the condition of being in surface-contact with each other (or, through a heat-conductive grease provided therebetween). Further, between various portions building up the heat cycle are connected tubes (i.e., conduits) 81, each of which is made of a metal, for example, as passages for the liquid coolant, preventing leakage of liquid coolant into the outside. Further, a hinge pipe 84 is provided for connecting the main body 300 of the personal computer to the cover 350.

As explained above, according to the present invention, it is possible to obtain a superior cooling effect with the cooling jacket, which can be manufactured, relatively easy and cheaply, enabling to transmit heat generated by the heat-generating element into the liquid coolant with high efficiency, thereby enabling to cool down the heat-generating element fully, even with a relatively small amount or volume of the liquid coolant.

The present invention may be embodied in other specific forms without departing from the spirit or essential feature or characteristics thereof. The present embodiments are therefore to be considered in all respects as only illustrative and not restrictive.

## Claims

1. Cooling jacket (100) for use in electronic apparatus having a heat-generating element (200) in the housing (120, 130) thereof, comprising:
a main body (120) being in contact with a surface of the heat-generating element (200), for transmitting heat generated within the heat-generating element (200) to a liquid coolant flowing therein,
a flow passage (110) for the liquid coolant, being formed inside the main body (120) of the cooling jacket, being wound round therein, and
an inlet and an outlet (111, 112) for the liquid coolant, being attached at both ends of the flow passage (110) for the liquid coolant,
and further comprising:
a dispersion member (150) disposed in the flow passage (110) being formed to be wound round, which is built up with a plural number of plate-like members (151, 152, 153) piled up to be aligned in the same direction within the flow passage (110) for the liquid coolant, wherein
the flow passage (110) for the liquid coolant is dispersed into a plural number of channels, and the aspect ratio of each of the channels, which are defined by the dispersion members between the dispersion members, lies in the range of 10 to 20.

2. Cooling jacket (100) according to claim 1, wherein the dispersion member is built up by gathering a plural number of members (151), each having a "U"-like cross-section.

3. Cooling jacket (100) according to claim 1, wherein the dispersion member is built up by gathering a plural number of tube-like members (152), each having an elliptical cross-section.

4. Cooling jacket (100) according to claim 1, wherein the dispersion member is built up by gathering a plural number of members (153), each having a "C"-like cross-section.

5. Cooling jacket (100) according to claim 2, wherein at least one opening (155) is formed in the surface of the dispersion member (151).

6. Cooling jacket (100) according to claim 3, wherein at least one opening (155) is formed in the surface of the dispersion member (152).

7. Cooling jacket (100) according to claim 4, wherein at least one opening (155) is formed in the surface of the dispersion member (153).
